(19) Europäisches Patentamt
European Patent Office
Office européen des brevets

(11) EP 2 573 417 A1

(12) EUROPEAN PATENT APPLICATION

(43) Date of publication:
27.03.2013 Bulletin 2013/13

(51) Int Cl.:
F16D 48/06 (2006.01)

(21) Application number: 12181896.7

(22) Date of filing: 27.08.2012

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 23.09.2011 US 201113242198

(71) Applicant: DEERE & COMPANY
Moline, Illinois 61265-8098 (US)

(72) Inventors:
• Cullen, Joseph A
  Waterloo, IA Iowa 50701 (US)
• Sundt, Tara A
  Cedar Falls, IA Iowa 50613 (US)

(74) Representative: Dehnhardt, Florian Christopher
John Deere GmbH & Co. KG
Global Intellectual Property Services
John-Deere-Straße 70
68163 Mannheim (DE)

(54) **Method for protecting a clutch assembly**

(57)    A method for protecting a clutch assembly comprises the steps of calculating an amount of energy being absorbed by a clutch (20); comparing said amount of energy to a predetermined threshold value; and derating an engine (16) coupled to said clutch dependent upon whether said amount of energy exceeds said predetermined threshold value in said comparing step.

Fig. 2

**Description**

The present invention relates to a method for protecting a clutch assembly.

A power source, such as an engine is often connected to a clutch assembly having a clutch, which allows for the selective engagement and disengagement of rotating power from the engine to a load. Often the engine is connected by way of the clutch to a transmission, for example in a vehicle. Clutches typically are employed in devices which have two rotating shafts. A first or input shaft is typically connected to the engine and a second or output shaft provides the output power to the transmission or load. The clutch connects the both shafts so that they may be locked together and spin at the same speed when the clutch is in an engaged position and the both shafts may spin at different speeds when the clutch is in a disengaged position. Clutches typically depend upon a frictional interface between a clutch disk connected to the input shaft and a clutch disk connected to the output shaft with the clutch often having a frictional surface with a known frictional coefficient that is durable enough to withstand the demands of the power transfer through the clutch. Organic and ceramic frictional materials are typically used for this purpose.

There are dry clutches and wet clutches. A dry clutch is, as the name implies, literally dry. A wet clutch is immersed in a liquid that functions as a cooling and lubricating fluid which also keeps the frictional surfaces of the clutch clean giving smooth performance and longer life of the clutch. Wet clutches lose some energy to the liquid, which then allows for cooling of the clutch. Since the frictional surfaces of a wet clutch can be somewhat slippery the stacking of multiple clutch disks is often used to compensate for the lower coefficient of friction to help eliminate any slippage under power when the clutch disks are engaged.

There is a safety clutch also known as a slip clutch that allows a rotating shaft to slip when a higher than normal resistance is encountered in a machine application. For example, a safety clutch may be employed in a grass mower so that the safety clutch will yield in the event that a blade hits an immovable object to thereby prevent damage to the mower.

What is needed in the art is a method for protecting a clutch assembly that allows detection of a potential degraded performance in a clutch and takes steps to protect the clutch in an effective manner.

These and other objects are achieved by the present invention, wherein a method for protecting a clutch assembly is provided. The method comprises the steps of calculating an amount of energy being absorbed by a clutch; comparing said amount of energy to a predetermined threshold value; and derating an engine coupled to said clutch dependent upon whether said amount of energy exceeds said predetermined threshold value in said comparing step.

For a complete understanding of the objects, techniques, and structure of the invention reference should be made to the following detailed description and accompanying drawings:

Fig. 1    is a schematic diagram of a vehicle having a power system which includes a electrically controllable clutch assembly, and

Fig. 2    is a flow chart of an exemplary embodiment of a method for protecting a clutch assembly as shown on Fig. 1.

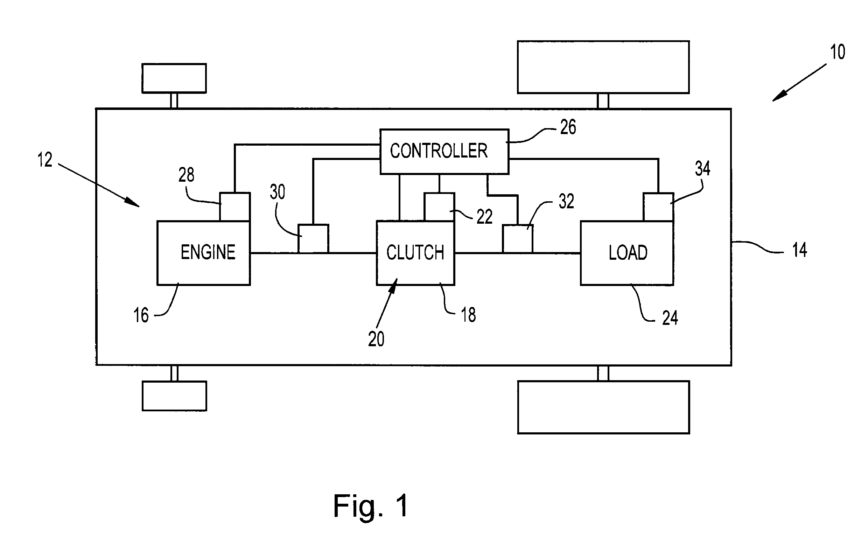

Referring now to the drawings, and more particularly to Fig. 1, there is illustrated a vehicle 10 having a power system 12 that is connected to various parts of the vehicle 10.

The power system 12 is situated on a chassis 14 of the vehicle 10. The power system 12 includes an engine 16, a clutch assembly 18 having a clutch 20 electrically controllable by a clutch solenoid (not shown) and a clutch cooling system 22. Connected to the clutch assembly 18 is a load 24. Load 24 represents any load that is being driven by the engine 16 by way of the intermediate clutch assembly 18, including a transmission that may immediately follow and be connected to the clutch assembly 18. The engine 16 may be an internal combustion engine such as a diesel engine and with the use of the present invention, engine 16 may be a high power engine while clutch assembly 18 may be a clutch assembly 18 that would normally not be associated with such high power engine except for the ability of the present invention to protect the clutch assembly 18 and thereby the power system 12.

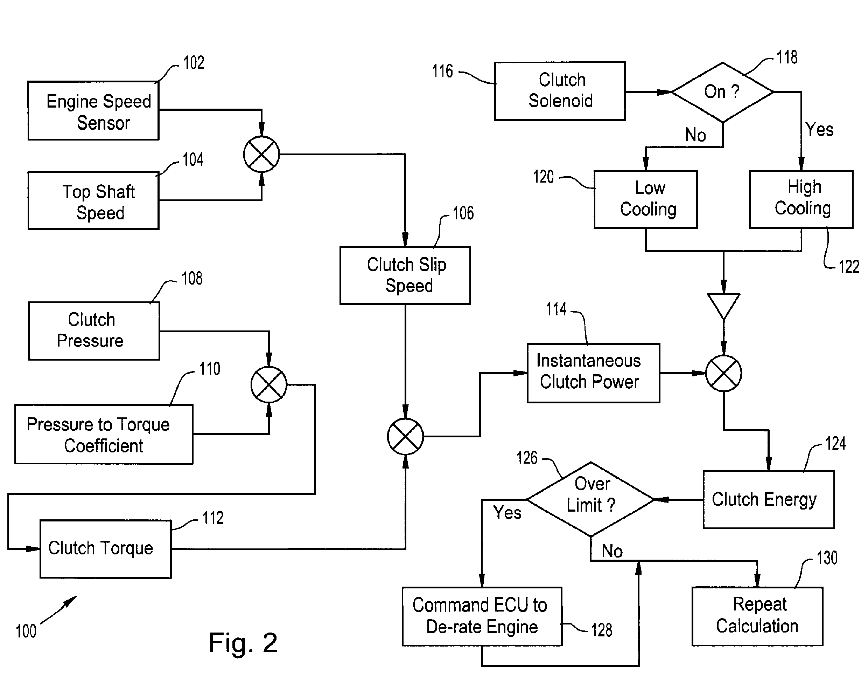

Additionally associated with the power system 12 is a controller 26 that interacts with engine control unit 28, shaft speed sensor 30, shaft speed sensor 32, load sensor 34, and the clutch solenoid. Additionally controller 26 interfaces with clutch cooling system 22. The term interface is broadly applied and includes providing information to and receiving information from various interconnections. Controller 26 is illustrated as a separate device but it may be incorporated into the engine control unit 28 or be separately positioned on the chassis 14 or be associated directly with the clutch assembly 18. The controller 26 and the method carried out therein may be carried out in a digital, analog or a combination of digital and analog electrical signal processing. For the sake of clarity it will be assumed that controller 26 is an electrical digital controller. The controller 26 has a processing system as well as a memory for the storage of data and programming steps including the steps of a method for protecting the clutch assembly 18 as illustrated in Fig. 2.

Now, referring to Fig. 2 there is illustrated an exemplary embodiment of a method for protecting the clutch assembly 18. The method includes using information coming from an engine speed sensor at step 102 and more specifically the input speed of an input shaft coming from engine 16 which is sensed by shaft speed sensor 30. The output speed of an output shaft transferring power from the clutch assembly 18 is measured by shaft speed sensor 32, which takes place at step 104. The input speed measured at step 102 and the output speed measured at step 104 are compared to result in a clutch slip speed at step 106. The clutch slip speed is a calculated value and may be the difference between the input speed at step 102 and the output speed at step 104 to thereby compute the clutch slip speed of step 106. Controller 26 receives a clutch pressure at step 108 which is measured by an appropriate sensor in the clutch assembly 18. The clutch pressure is combined with a pressure to torque coefficient, illustrated at step 110, the combination of the clutch pressure from step 108 having the pressure to torque coefficient from step 110 applied thereto results in a clutch torque at step 112. Mathematical elements associated therewith may be a multiplication between the clutch pressure obtained at step 108 and the use of the pressure to torque coefficient from step 110. The pressure to torque coefficient from step 110 is a constant that is determined by the geometry of the clutch 20 such as the size of the clutch disks and the number of clutch disks in the clutch assembly 18.

The clutch slip speed from step 106 and the clutch torque from step 112 are combined mathematically, for example by way of multiplication. The result is an instantaneous clutch power at step 114. This is a calculation of the power absorbed by the clutch assembly 18 and is not being transmitted by way of the output shaft. Instantaneous clutch power is a measure of power being absorbed potentially by the liquid of a wet clutch.

The clutch solenoid in clutch assembly 18 is either activated or not activated, either under the control of controller 26 or as detected by a sensor detecting the activation of the clutch solenoid at step 116. If the clutch solenoid is on, as detected in step 118, then the method proceeds to step 122 where a high cooling condition of clutch assembly 18 is being undertaken. If the clutch solenoid is detected as not being on at step 118, then a low cooling condition of clutch assembly 18 is being undertaken as illustrated by step 120. Information as to whether clutch cooling system 22 is active at a low or high level is combined with the instantaneous clutch power from step 114 to result in the overall calculation of the amount of clutch energy being absorbed by the clutch assembly 18 at step 124. The instantaneous clutch power and the effect of the cooling system 22 is integrated over time to calculate the amount of absorbed clutch energy at step 124. This calculation is a cumulative calculation such as integration or as digital numeric integration of data values arrived at over short time intervals, such as 100 milliseconds time intervals. This calculated cumulative clutch energy of clutch assembly 18 is then compared to a predetermined threshold value at step 126 to determine if the cumulative clutch energy is over the predetermined threshold value. If the cumulative clutch energy is over the predetermined threshold value then the method proceeds to step 128 in which engine control unit 28 is either requested or commanded to derate the power output of engine 16 by a predetermined value, such as 15%. This is carried out by controller 26 sending information to engine control unit 28 to derate engine 16. The method then proceeds to step 130 where it is repeated, perhaps, for example, every 100 milliseconds. If at step 126 it is determined that the cumulative clutch energy is not over the predetermined threshold value then the method proceeds to step 130 in which the method is repeated. The present invention protects not only the clutch assembly 18 but may additionally protect the load 24.

Alternatively, if the cumulative clutch energy calculated at step 124 exceeds a first predetermined threshold value at step 126, controller 26 requests that engine 16 be derated by the predetermined amount of 15%, although other amounts are also contemplated. When the cumulative clutch energy is measured at step 124 and it is less than a second predetermined threshold value, which is less than the first predetermined threshold value used at step 126 to determine that engine 16 should be derated at step 128, then the request for the engine 16 to be derated is removed and the power potentially available from engine 16 is subsequently increased. The second predetermined threshold value may be 80% (although other values are also contemplated) of the first predetermined value used in step 126 to determine that engine 16 should be derated, thus providing a hysteresis to prevent the engine power from changing excessively when the cumulative clutch energy lingers around the first predetermined value used to derate engine 16.

The clutch slip speed at step 106 can also be thought of as a clutch slip percentage if a ratio is computed from the input shaft speed at step 102 and the output shaft speed at step 104. These are calculated if engine 16 is running and clutch 20 is partially or fully engaged. For this, the clutch slip speed in rounds per minute (RPM) can be calculated as the absolute value of:

$$Slip = ((Engine\_Speed \cdot Current\_Gear\_Ratio) - Output\_Shaft\_Speed) ,$$

with the Current_Gear_Ratio referring to any gearing that is present between the engine 16 and the clutch assembly 18, which once applied to the Engine_Speed yields the input speed of the input shaft of clutch assembly 18.

The clutch slip percentage can be then calculated as:

$$Ratio = Slip / (Engine\_Speed \cdot Current\_Gear\_Ratio)$$

$$\%Slip = Ratio \cdot 100$$

The cumulative clutch energy can be expressed in decajoules. Cumulative clutch energy that is calculated at step 124 can be initialized to zero at the power-up of power system 12. If engine 16 is running and clutch 20 is engaged, either partially or fully, the following actions are taken as a calculation of the instantaneous clutch power: The instantaneous clutch power is combined to the cumulative clutch energy at step 124, and a calculation is carried out to compute a clutch cooling rate. There is also a relationship between the clutch torque and the clutch pressure. The clutch torque is mapped to the measured clutch pressure using the following relationship:

$$Torque\ [Nm] = Measured\_Pressure\ [kPa] \cdot 0.6 - 140$$

There can be table data populated with the clutch cooling rate versus the measured clutch pressure. Clutch cooling rates retrieved from this table can be interpolated with respect to the clutch pressure. This table can be thought of as the clutch cooling rate versus clutch pressure and is provided as an example:

| Measured_Pressure | Heat Removed |
|---|---|
| [kPa] | [kJ/sec] / [decajoules for each 100 ms] |
| 1500 | 42.0 / 420 |
| 1425 | 42.0 / 420 |
| 1350 | 42.0 / 420 |
| 1275 | 42.0 / 420 |
| 1200 | 42.0 / 420 |
| 1125 | 42.0 / 420 |
| 1050 | 42.0 / 420 |
| 975 | 42.0 / 420 |
| 900 | 42.0 / 420 |
| 825 | 42.0 / 420 |
| 750 | 42.0 / 420 |
| 675 | 42.0 / 420 |
| 600 | 42.0 / 420 |
| 525 | 42.0 / 420 |
| 450 | 42.0 / 420 |
| 375 | 42.0 / 420 |
| 300 | 42.0 / 420 |
| 225 | 31.5 / 315 |
| 150 | 15.8 / 158 |
| 75 | 6.6 / 66 |
| 0 | 6.6 / 66 |

Once the clutch torque is known at step 112 power going into clutch 20 can be calculated by multiplying the clutch torque by the clutch slip speed and dividing by a constant. Factoring in time then converts the instantaneous clutch power to cumulative clutch energy, which is undertaken in step 124. Controller 26 carries out the calculation in units of decajoules. A software implementation is illustrated in the following calculations and rules:

$$\text{Clutch\_Power} = (\text{Clutch\_Torque [Nm]} \cdot \text{Clutch\_Slip\_Speed [RPM]}) / 9550 \ [\text{kW}]$$

$$\text{Clutch\_Energy every 100 ms} = \text{Clutch\_Power} \cdot \text{Time} = \text{Clutch\_Power} \cdot 100 \text{ ms} = \text{Clutch\_Power} / 10$$

$$\text{Clutch\_Energy every 100 ms} = [\text{Clutch\_Torque} \cdot \text{Clutch\_Slip\_Speed}] / 95500 \ [\text{kJ}]$$

$$\text{Clutch\_Energy every 100 ms} = [\text{Clutch\_Torque} \cdot \text{Clutch\_Slip\_Speed}] / 9550 \ [0.1\text{kJ}]$$

$$\text{Clutch\_Energy every 100 ms} = [\text{Clutch\_Torque} \cdot \text{Clutch\_Slip\_Speed}] / 955 \ [0.01\text{kJ}]$$

converting to units of decajoules.

As another way of understanding the present invention, it can be thought of as a set of rules that can be executed by a rule driven processing system, those rules being:

Rule 1 - If cumulative clutch energy exceeds a first predetermined threshold value, then controller 26 shall request a 15% engine power derate.

Rule 2 - If engine power is being derated AND cumulative clutch energy is less than a second (lower) predetermined threshold value, then controller 26 shall stop requesting the engine power derate.

Additional alternative rules:

Rule 3 - If cumulative clutch energy exceeds the first predetermined threshold value, then controller 26 shall report a fault code that indicates that the clutch 20 has been slipping for too long.

Rule 4 - If the fault code indicating that the clutch 20 has been slipping for too long is active AND the cumulative clutch energy is less than the second predetermined threshold value, then controller 26 shall stop reporting the fault code.

The present invention advantageously protects the clutch assembly 18 from being over-driven when it is detected that clutch 20 is slipping along with the detection of cumulative clutch energy being increasingly absorbed in clutch assembly 18. This advantageously allows for coupling of a higher power engine 16 to clutch assembly 18 as well as reducing the amount of needed maintenance, since clutch assembly 18 is protected by the present invention. Although not illustrated it is understood that information about the function of the method shown in Fig. 2 can be presented to an operator by way of an operator interface and data obtained can also be stored in memory for later retrieval by maintenance personnel.

**Claims**

1. A method for protecting a clutch assembly, comprising the steps of calculating an amount of energy being absorbed by a clutch (20); comparing said amount of energy to a predetermined threshold value; and derating an engine (16) coupled to said clutch (20) dependent upon whether said amount of energy exceeds said predetermined threshold value in said comparing step.

2. The method according to claim 1, **characterized in that** said calculating step includes determining an instantaneous amount of power being absorbed by said clutch (20).

**3.** The method according to claim 2, **characterized in that** said instantaneous amount of power is calculated from a slip speed of said clutch (20) and a torque being transferred by said clutch (20).

**4.** The method according to claim 3, **characterized in that** said slip speed is determined by measuring an input speed of an input shaft entering said clutch (20); measuring an output speed of an output shaft of said clutch (20); and taking a difference between said input speed and said output speed to thereby determine said slip speed.

**5.** The method according to claim 4, **characterized in that** said torque is determined by measuring a pressure applied to said clutch (20); and mathematically applying a pressure-to-torque coefficient to said pressure to arrive at said torque.

**6.** The method according to claim 2, **characterized in that** said calculating step additionally includes factoring in an amount of cooling of said clutch (20) that is taking place by a clutch cooling system (22).

**7.** The method according to claim 6, **characterized in that** said amount of cooling is dependent upon a cooling mode selection of said clutch cooling system (22).

**8.** A power system having a clutch assembly (18) connected to an engine (16), comprising a controller (26) coupled to the engine (20) and to the clutch assembly (18), the controller (26) executing a method according to claim 1.

**9.** A vehicle, comprising a chassis (14); an engine (16) supported by said chassis (14); a clutch assembly (18) containing a clutch (20), said clutch assembly (18) coupled to said engine (16); and a controller (26) executing a method according to claim 1.

Fig. 1

EP 2 573 417 A1

Fig. 2

Europäisches
Patentamt

European
Patent Office

Office européen
des brevets

# EUROPEAN SEARCH REPORT

Application Number

EP 12 18 1896

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/061603 A1 (MACK WILLIAM J [US]) 1 April 2004 (2004-04-01) * paragraphs [0012] - [0026]; figure 2 * | 1-9 | INV. F16D48/06 |
| X | GB 2 149 923 A (LUCAS IND PLC) 19 June 1985 (1985-06-19) * the whole document * | 1-9 | |
| X | DE 10 2005 061080 A1 (LUK LAMELLEN & KUPPLUNGSBAU [DE]) 27 July 2006 (2006-07-27) * the whole document * | 1-9 | |
| X | US 2006/004506 A1 (STEHLE BJOERN [DE] ET AL) 5 January 2006 (2006-01-05) * abstract * * paragraphs [0017] - [0028], [0034] - [0037] * | 1-9 | |
| X | US 2009/318265 A1 (GINTHER BRIAN B [US]) 24 December 2009 (2009-12-24) * paragraphs [0004], [0011] * | 1-9 | TECHNICAL FIELDS SEARCHED (IPC) F16D |
| A | US 2010/200357 A1 (OKABE KAZUNARI [JP] ET AL) 12 August 2010 (2010-08-12) * abstract * * paragraph [0086] * | 1-9 | |
| A | DE 196 39 296 C1 (DAIMLER BENZ AG [DE]) 2 April 1998 (1998-04-02) * column 3, line 59 - column 4, line 24 * | 1-9 | |
| A | US 2010/113216 A1 (AVNY ELI [US] ET AL) 6 May 2010 (2010-05-06) * figures 5,6 * | 1-9 | |

The present search report has been drawn up for all claims

| Place of search | Date of completion of the search | Examiner |
|---|---|---|
| The Hague | 9 October 2012 | Giráldez Sánchez, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 12 18 1896

This annex lists the patent family members relating to the patent documents cited in the above-mentioned European search report.
The members are as contained in the European Patent Office EDP file on
The European Patent Office is in no way liable for these particulars which are merely given for the purpose of information.

09-10-2012

| Patent document cited in search report | | Publication date | Patent family member(s) | | Publication date |
|---|---|---|---|---|---|
| US 2004061603 | A1 | 01-04-2004 | AU | 2003263541 A1 | 23-04-2004 |
| | | | BR | 0314508 A | 26-07-2005 |
| | | | CN | 1695013 A | 09-11-2005 |
| | | | DE | 60320120 T2 | 18-06-2009 |
| | | | EP | 1546570 A1 | 29-06-2005 |
| | | | JP | 4702595 B2 | 15-06-2011 |
| | | | JP | 2006501420 A | 12-01-2006 |
| | | | US | 2004061603 A1 | 01-04-2004 |
| | | | WO | 2004031604 A1 | 15-04-2004 |
| GB 2149923 | A | 19-06-1985 | NONE | | |
| DE 102005061080 | A1 | 27-07-2006 | NONE | | |
| US 2006004506 | A1 | 05-01-2006 | AT | 395230 T | 15-05-2008 |
| | | | CN | 1715110 A | 04-01-2006 |
| | | | EP | 1616770 A1 | 18-01-2006 |
| | | | JP | 2006017306 A | 19-01-2006 |
| | | | KR | 20060066609 A | 16-06-2006 |
| | | | US | 2006004506 A1 | 05-01-2006 |
| US 2009318265 | A1 | 24-12-2009 | DE | 112007000995 T5 | 28-05-2009 |
| | | | JP | 2009535592 A | 01-10-2009 |
| | | | US | 2009318265 A1 | 24-12-2009 |
| | | | WO | 2007130446 A2 | 15-11-2007 |
| US 2010200357 | A1 | 12-08-2010 | EP | 2136099 A1 | 23-12-2009 |
| | | | JP | 2009108942 A | 21-05-2009 |
| | | | US | 2010200357 A1 | 12-08-2010 |
| | | | WO | 2009057610 A1 | 07-05-2009 |
| DE 19639296 | C1 | 02-04-1998 | NONE | | |
| US 2010113216 | A1 | 06-05-2010 | CN | 101734153 A | 16-06-2010 |
| | | | DE | 102009044385 A1 | 06-05-2010 |
| | | | US | 2010113216 A1 | 06-05-2010 |

EPO FORM P0459

For more details about this annex : see Official Journal of the European Patent Office, No. 12/82